# EUROPÄISCHE PATENTANMELDUNG

(11) **EP 0 575 662 A1**
(43) Veröffentlichungstag der Anmeldung: **29.12.1993**
(21) Anmeldenummer: 92114092.7
(22) Anmeldetag: 18.08.1992
(51) Int. Cl.: F16H 7/12

(54) **Riemenspannvorrichtung**

(30) Priorität: 25.06.1992 DE 4220879
(71) Anmelder: Litens Automotive GmbH, W-6460 Gelnhausen 2 (DE)
(72) Erfinder: Schönmeier, Horst, W-6487 Flörsbachtal (DE); Wilhelm, Peter, W-6460 Gelnhausen (DE); Geis, Holger, W-6465 Biebergemünd (DE); Rottstedt, Klaus, W-6451 Hammersbach 1 (DE)
(74) Vertreter: Grünecker, Kinkeldey, Stockmair & Schwanhäusser Anwaltssozietät

(57) **Zusammenfassung**

Die Erfindung betrifft eine Riemenspannvorrichtung mit einem Basisteil (10) und einem Spannerteil (20) mit einer daran gehaltenen Riemenscheibe (25), wobei Basisteil (10) und Spannerteil (20) in einem Lager (18) um eine gemeinsame Achse gegeneinander verdrehbar gelagert sind, wobei das Basisteil (10) und das Spannerteil (20) jeweils in radialer Richtung beabstandete Stege (13,22) aufweisen, und Spannerteil (20) und Basisteil (10) über eine Feder (33) miteinander in Verbindung stehen.

Die Erfindung hat zur Augabe, eine Riemenspannvorrichtung in flacher raumsparender Bauweise mit verringerter Abnutzung und somit erhöhter Lebensdauer bereitzustellen. Diese Aufgabe wird erfindungsgemäß dadurch gelöst, daß der Steg (22) des Spannerteils (20) eine Ausnehmung (23) besitzt, durch die in radialer Richtung ein Zwischenteil (31) ragt, an dessen einer Seite die Feder (33) anliegt und das sich auf seiner gegenüberliegenden Seite gegen den Steg (13) des Basisteils abstützt, und das Zwischenteil (31) in einer radialen Richtung in Richtung der auf das Spannerteil (20) wirkenden resultierenden Riemenkraft angeordnet ist. Durch diese erfindungsgemäße Lösung wird das von der Zugkraft des Riemens hervorgerufene Drehmoment am Lager des Spannerteils aufgehoben und dadurch die Lebensdauer der Riemenspannvorrichtung erhöht.

## Beschreibung

Die Erfindung betrifft eine Riemenspannvorrichtung mit einem Basisteil und einem Spannerteil mit einer daran gehalterten Riemenscheibe, wobei Basisteil und Spannerteil in einem Lager um eine gemeinsame Achse gegeneinander verdrehbar gelagert sind, wobei das Basisteil und das Spannerteil jeweils in radialer Richtung beabstandete Stege aufweisen, und Spannerteil und Basisteil über eine Feder miteinander in Verbindung stehen.

Derartige Riemenspannvorrichtungen werden bei Vorrichtungen zur Kraftübertragung mittels eines umlaufenden Riemens verwendet. Insbesondere finden diese Riemenspannvorrichtungen Verwendung an Verbrennungsmotoren. Die vom Verbrennungsmotor in Bewegung versetzte Welle ist mit einer Riemenscheibe versehen, in die ein Riemen eingreift, der um eine weitere Riemenscheibe an einer anzutreibenden Vorrichtung umläuft und mit beiden Riemenscheiben aufgrund der Reibungskraft verbunden ist. Bei zu loser Führung des Riemens kann es zum Schlupf des Riemens in der Antriebsriemenscheibe mit einem entsprechenden Schlupfgeräusch kommen, oder der Riemen verfällt bei Betrieb in eine schwingende oder schlagende Bewegung, was einen erhöhten Riemenverschleiß bewirkt. Daher ist es notwendig, Spannvorrichtungen einzubauen, die für eine gleichmäßige Spannung des Riemens sorgen, um so das Schlagen des Riemens oder ein Durchrutschen des Riemens zu verhindern. Die Riemenspannvorrichtung bestent aus einem, meist am Motorblock befestigten Basisteil, einem Spannerteil, auf dem sich eine weitere Riemenscheibe befindet, wobei das Spannerteil drehbar gegen eine Spannung einer Feder am Basisteil gehaltert ist. Aufgrund der Feder wirkt auf das Spannerteil eine Kraft, die über eine entsprechende Drehbewegung des Spannerteils zum Spannen des Riemens führt. Mit der automatischen Riemenspannvorrichtung kann ohne Nachstellung die Riemenspannung über die gesamte Lebensdauer des Riemens annähernd konstant gehalten werden, und eine konstante über die Spannung des Riemens einstellbare Lagerbelastung an den anzutreibenden Aggregaten erzielt werden. Außerdem wird das Durchrutschen des Riemens sowie das Auftreten von Riemenschwingungen verhindert. Eine derartige Riemenspannvorrichtung ist zum Beispiel aus der De-OS 40 10 928 bekannt.

Das Lager zwischen dem Spannerteil und dem Basisteil der Riemenspannvorrichtung ist durch die Federkraft und die ihr entgegenwirkende Riemenkraft belastet. Da die Riemenkraft senkrecht zu der Achse des Lagers des Spannerteils wirkt, wirkt auf dieses Lager ein Drehmoment, das zu einer Verkippung des Lagers führt. Daher ist dieses Lager einem verhältnismäßig hohen Verschleiß und einer kurzen Lebensdauer unterworfen. Aufgrund der eingeschränkten Raumvorgaben für eine Riemenspannvorrichtung bei der Verwendung mit Verbrennungsmotoren ist eine größere Ausgestaltung dieses Lagers mit entsprechend höherem Raumbedarf nicht möglich. Zudem verfügt eine Riemenspannvorrichtung mit der erforderlichen flachen Bauausführung über ein Lager sehr kurzer axialer Länge. Da eine Dämpfung der federnden Bewegung des Spannerteils meist über die in dem Lager herrschende Reibung erzielt wird, kann im allgemeinen bei einem Lager kurzer Länge nur eine geringe Dämpfung erreicht werden. Durch eine geringe Dämpfung der federnden Wirkung des Riemenspannerteils wird eine zusätzliche Erhöhung im Lagerverschleiß auftreten.

Es ist Aufgabe der vorliegenden Erfindung, eine Riemenspannvorrichtung der eingangs erwähnten Art zu schaffen, die bei einer flachen Bauart das Auftreten von hohen Lagerkräften vermeidet und sich durch eine erhöhte Lebensdauer auszeichnet.

Erfindungsgemäß wird diese Aufgabe dadurch gelöst, daß der Steg des Spannerteils eine Ausnehmung besitzt, durch die in radialer Richtung ein Zwischenteil ragt, an dessen einem Ende die Feder anliegt und das sich auf seiner gegenüberliegenden Seite gegen den Steg des Basisteils abstützt, und das Zwischenteil in einer radialen Richtung in Richtung der auf das Spannerteil wirkenden resultierenden Riemenkraft angeordnet ist.

Durch diese erfindungsgemäße Lösung wird die Lebensdauer einer Riemenspannvorrichtung einer flachen Bauart erhöht. Die resultierende Kraft des Riemens wirkt erfindungsgemäß nicht mehr auf das sich bewegende Lager ein, sondern wird von dem Zwischenstück direkt auf das Basisteil übertragen und von diesem aufgenommen. Damit ist das Lager, über das das Spannerteil an dem Basisteil befestigt ist, frei von der Belastung durch den Riemen und damit ohne erhöhten Verschleiß. Dies führt gleichzeitig zu einer erhöhten Lebensdauer. Entsprechend der vorliegenden Erfindung wird auch die Dämpfung der Riemenspannvorrichtung zur Vermeidung von Riemenschwingungen über das Lager erreicht. Da das Zwischenstück an einem Teil des Basisteils aufliegt, und es über die Feder mit einer Kraft beaufschlagt ist, wird durch die Reibung des Zwischenstücks am Steg des Basisteils die Bewegung des Spannerteils gedämpft.

In einer besonderen Ausführungsform der Erfindung sind die Stege des Spannerteils und des Basisteils als konzentrische, ringförmige Stege über den gesamten Umfang ausgebildet.

Damit ist insbesondere die Festigkeit dieser Stege erhöht. Aufgrund der Rotationssymmetrie der Stege lassen sich Basisteil und Spannerteil in einfacher Weise herstellen.

In einer weiteren bevorzugten Ausführungsform sind in bezug auf die Lage des Steges des Spannerteils der Steg des Basisteils radial innenliegend und die Feder radial außenliegend angeordnet. In den Steg des Spannerteils ist dabei ein Zwischenteil eingefügt, über das sich die an dessen Außenseite anliegende Feder nach innen hin gegen den Steg des Basisteils abstützt. Da für eine Feder mit den vorgegebenen Federkräften eine bestimmte Ausführungsgröße nur schwer unterschritten werden kann, erweist es sich als günstig für die radiale Größe der Riemenspannvorrichtung die Stege des Spannerteils und des Basisteils radial innenliegend von der Feder anzuordnen. Bei radial außenliegender Anordnung der Feder ist zudem der Zusammenbau der Riemenspannvorrichtung erleichtert.

In einer weiteren besonderen Ausführungsform besitzt das Zwischenteil, das in die Aufnehmung des Stegs des Spannerteils eingefügt ist und das die Kraft auf den Steg des Basisteils überträgt, eine größere Dicke, insbesondere die doppelte Dicke, als der ringförmige Steg des Spannerteils. Daher ist die Feder durch das aus dem Steg des Spannerteils vorstehende Zwischenteil verbogen, wodurch von der Feder permanent eine Vorspannkraft über das Zwischenteil auf den Steg des Basisteils ausgeübt wird. Dies bewirkt eine höhere Dämpfung der Bewegung des Spannerteils aufgrund der höheren Reibungskraft und zugleich dient die höhere Materialdicke des Zwischenteils als Reserve für eventuelle Verschleißverluste in der Materialdicke dieses Zwischenteils. Selbst bei Verschleiß des Zwischenteils, das mit dem Spannerteil bei Drehbewegungen mitgenommen wird, ist somit aufgrund der größeren Dicke des Zwischenteils die erfindungsgemäße Verbesserung über einen Zeitraum gewährleistet, der länger als die erhöhte Lebensdauer der Riemenspannvorrichtung ist. Das Zwischenteil kann dabei aus einem Kunststoffmaterial bestehen.

In einer weiteren bevorzugten Ausführungsform handelt es sich bei der Feder um eine Drehschenkelfeder. Da ihre Enden jeweils am Basisteil und am Spannerteil befestigt sind, wird eine Torsion der Feder verursacht, die bei Verdrehen des Spannerteils gegen das Basisteil zu einer Verringerung des radialen Durchmessers der Drehschenkelfeder führt. Die Drehschenkelfeder ist in einer bevorzugten Ausführungsform in bezug auf den Steg des Spannerteils außenliegend angeordnet, und stützt sich dabei über das Zwischenteil gegen den Steg des Basisteils ab. Dazu muß die Drehschenkelfeder so ausgelegt sein, daß bei einem Spannen des Spannerteils eine Verringerung des Durchmessers der Drehschenkelfeder erfolgt. Somit wird eine zusätzliche Kraft über die Drehschenkelfeder auf das Basisteil übertragen, um die die von der Riemenkraft verursachte Gleitlagerkraft zu verringern. Die Verwendung einer Drehschenkelfeder erweist sich als günstig, um die benötigte Federkraft zu erzielen und zugleich die gegebenen beschränkten Vorgaben in bezug auf die Größe der Feder einzuhalten.

Um eine optimale Kraftwirkung und Lebensdauer zu erzielen, ist es vorteilhaft, entsprechend einer weiteren bevorzugten Ausführungsform der Erfindung das Ende der Feder so an dem Spannerteil zu befestigen, daß sich ein Viertel einer Windung der Feder zwischen dem Befestigungspunkt und der Richtung des Zwischenteils befindet. In diesem Fall wird bei Belastung der Feder eine maximale Kraft in der Richtung der resultierenden Riemenkraft auf den Steg des Basisteils durch das Zwischenteil übertragen, und somit über das Federende eine entgegengerichtete und teilweise die resultierende Riemenkraft kompensierende Kraft auf das Spannerteil übertragen.

In einer weiteren besonderen Ausführungsform der Erfindung liegt auf der Seite des Basisteils das andere Ende der Drehschenkelfeder an einer ringförmigen Federbuchse an, wobei die Federbuchse sich radial nach innen hin gegen den Steg des Spannerteils abstützt und eine kürzere axiale Länge als die Drehschenkelfeder besitzt.

Die Federbuchse ist bevorzugt aus einem Stück gefertigt und erstreckt sich über den vollen Umfang. Die Breite der Federbuchse ist insbesondere so ausgelegt, daß wenigstens eine Windung an der Seite des Basisteils der Drehschenkelfeder an ihr anliegen kann.

Bevorzugt wird ein zweites Ende der Feder so am Basisteil befestigt, daß sich ein Viertel einer Windung der Feder zwischen dem Befestigungspunkt und der Richtung des Zwischenteils befindet. In gespanntem Zustand übt die Feder im wesentlichen in einem um 90^{o} vom Befestigungspunkt versetzten Bereich einen Druck auf die Federbuchse aus. Die starre Federbuchse liegt ihrerseits gegen den Steg des Spannerteils an, und überträgt daher eine Kraft auf das Spannerteil. Diese Kraft bewirkt ein Drehmoment auf das Lager, das dem von der Riemenkraft verursachten Drehmoment entgegengerichtet ist. Damit wird ein zusätzlicher Ausgleich der Kippmomente auf das Lager erreicht, das schließlich mit einer konstanten Flächenpressung belastet wird. Um eine Kraftwirkung in der gewünschten Richtung zu erzielen, ist es notwendig, daß der Befestigungspuntk um 90^{o} oder ein Viertel der Windung der Feder gegen das Zwischenteil, und damit die Richtung der resultierenden Riemenkraft, versetzt angebracht ist. Die Kraft auf die Federbuchse entsteht beim Spannen und der entsprechenden Verringerung des Durchmessers der Feder, vorzugsweise in dem um 90^{o} versetzten Bereich, wie in der DE-OS 40 10 928 erläutert ist. Es ist dazu allerdings erforderlich, daß die Federbuchse als starrer, nicht verformbarer Körper ausgebildet ist, also insbesondere keinen Schlitz besitzt, der eine Veränderung des Durchmessers der Federbuchse zuläßt.

In einer weiteren bevorzugten Ausführungsform der Erfindung besitzt das Zwischenstück eine kürzere axiale Länge als die Feder. Insbesondere ist das Zwischenstück von einer axialen Länge, im Bereich der Stärke des Federdrahtes, die ausreicht, die Feder auf dem Zwischenstück zur Anlage zu bringen, ohne daß die Gefahr eines Abgleitens oder Verrutschens der Feder von dem Zwischenteil besteht.

Um eine günstige Kraftübertragung der Feder auf das Basisteil zu erhalten, ist in einer weiteren besonderen Ausführungsform das Zwischenteil axial in der Nähe des Spannerteils angebracht.

In einer weiteren besonderen Ausführungsform befindet sich ein geeignetes Schmiermittel zwischen dem Steg des Basisteils und dem Zwischenteil und zwischen dem Steg des Spannerteils und der Federbuchse. Durch die Wahl eines geeigneten Schmiermittels ist es möglich, über die gesamte Lebensdauer der Riemenspannvorrichtung eine annähernd konstante Dämpfung zu erreichen.

Die Erfidnung soll nun anhand eines in den beiliegenden Zeichnungen dargestellten Ausführungsbeispiels näher erläutert und beschrieben werden. Es zeigen:
- Fig.1: eine Querschnittsansicht der Riemenspannvorrichtung gemäß der Erfindung, und
- Fig.2: eine Draufsicht auf die Riemenspannvorrichtung gemäß der Erfindung.

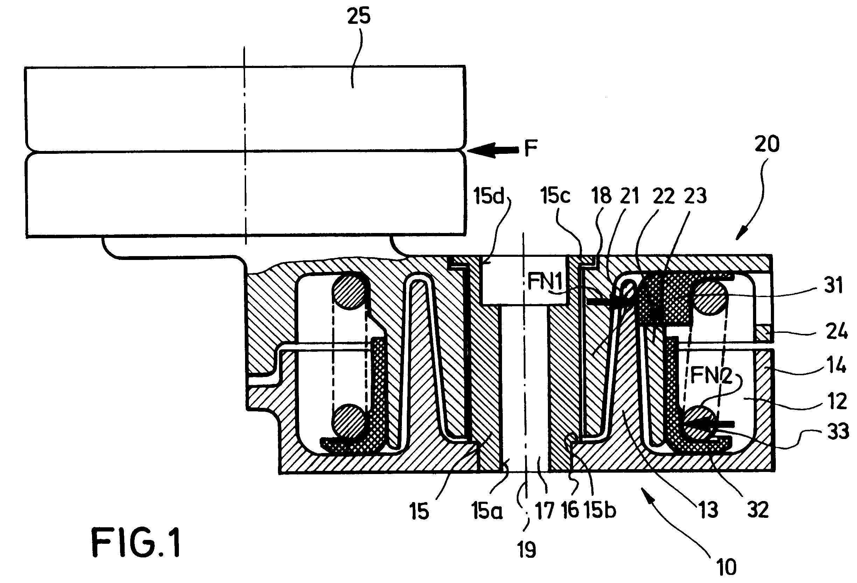

In der Fig. 1 bezeichnet das Bezugszeichen 10 ein Basisteil der Riemenspannvorrichtung, das fest, zum Beispiel am Block eines Verbrennungsmotors, befestigt wird. In seiner Mitte entlang einer Achse 19 besitzt das Basisteil 10 eine Bohrung 16. In die Bohrung 16 ist paßgenau eine Lagerhülse 15 eingefügt, die ihrerseits eine zentrale Bohrung 15a aufweist. Die Lagerhülse ist mit dem Basisteil 10 durch eine Preßpassung verbunden. Die Bohrung 15a der Hülse 15 weist zur Seite der Riemenscheibe hin eine Erweiterung 15d auf, um einen Bolzen 17 aufzunehmen. Durch Festschrauben des Bolzens 17 an einem Halterungsstück, wird die Hülse 15, die das Basisteil 10 hält, an dem Halterungsstück befestigt. Durch einen Absatz oder Bund 15b der Hülse 15 wird das Basisteil 10 zwischen dem Werkstück und der Erweiterung 15b der Hülse 15 eingeschlossen und somit festgehalten. Durch einen vorstehenden ringförmigen Flansch 15c der Hülse 15 wird ein Spannerteil 20 an dem Basisteil 10 befestigt. Die äußere Wandung der Hülse 15 und seines Flansches 15c sind von hoher Oberflächengüte und glatt poliert und bilden einen Teil eines Gleitlagers 18, über das das Spannerteil 20 mit dem Basisteil 10 drehbar verbunden ist. Das Spannerteil 20 ist an seiner radial innenliegenden Seite zur Hülse 15 mit seinem Flansch 15c passend geformt und besitzt ebenfalls Oberflächen hoher Güte, die den entsprechenden äußeren Teil des Gleitlagers 18 bilden. Im Gleitlager befindet sich ein geeignetes Schmiermittel.

Das Basisteil 10 besitzt eine Ausnehmung 12. Diese Ausnehmung 12 ist auf der radial außenliegenden Seite durch die Wand 14 begrenzt. Auf der radial innenliegenden Seite ist am Basisteil 10 ein ringförmiger, konisch sich verjüngender, in Richtung des Spannerteils vorstehender Steg 13 ausgebildet. Das Spannerteil 20 bildet die dem Basisteil gegenüberliegende Begrenzung der Ausnehmung 12. Am Spannerteil ist mittels eines kurzen Steges 24 die radial außenliegende Begrenzung der Ausnehmung 12 vervollständigt. Das Spannerteil 20 weist einen ringförmigen, konisch sich verjüngenden, in Richtung des Basisteils 10 hin vorstehenden Steg 22 und radial weiter innenliegend einen ringförmigen, den äußeren Teil des Gleitlagers bildenden, in Richtung des Basisteils vorstehenden Steg 21 auf, wobei die beiden Stege 21 und 22 den Steg 13 des Basisteils umgreifen. Zwischen den Stegen 21 und 22 des Spannerteils und dem Steg 13 des Basisteils befindet sich durchgehend ein schmaler freier Spalt. Der Abstand dieses Spalts ist aufgrund der genauen Passung der Hülse 15 mit dem Spannerteil 20 und dem Basisteil 10 fest vorgegeben.

In der Ausnehmung 12 des Basisteils 10 verbleibt ein Hohlraum, in den eine Feder 33 eingefügt ist. In der bevorzugten Ausführungsform gemäß der Zeichnung ist die Feder 33 eine Drehschenkelfeder. Die Feder 33 ist mit ihrem einen Ende am Basisteil befestigt (die Befestigung ist in der Zeichnung nicht gezeigt) und liegt mit einer halben Windung an einer Federbuchse 33 an. Die Federbuchse 33 ist ringförmig ausgebildet, mit einer Verdickung zum Aufnehmen einer von der Feder übertragenen Kraft und einer rechtwinkeligen Fortführung in der Form eines Kragens, um die Feder an dem Basisteil 10 zu führen. Die Federbuchse 33 stützt sich radial nach innen hin mit seinem längeren Teil gegen den Steg 22 des Spannerteils hin ab. Die Feder 33 ist dabei vorteilhaft so an dem Basisteil 10 befestigt, daß ihr Ende um ca. 90^{o} zur der Richtung der resultierenden Riemenkraft versetzt ist und ein Viertel einer Windung zwischen dem Ende und dieser Richtung der Riemenkraft liegt. Damit wird erreicht, daß 90^{o} versetzt zu dem Ende der Feder 33 in der Richtung der Riemenkraft eine auf einen kurzen Bereich des Umfangs der Federbuchse 33 beschränkte Kraft parallel zur resultierenden Riemenkraft wirkt, die über die Federbuchse 33 auf das Spannerteil 20 übertagen wird. Diese Kraft übt nun ein Kippmoment auf das Spannerteil 20 und das Gleitlager 18 aus, das dem verbleibenden Kippmoment aufgrund der resultierenden Riemenkraft entgegenwirkt.

Das andere Ende der Feder 33 ist an dem Spannerteil 20 befestigt (die Befestigung ist in der Zeichnung nicht gezeigt). Die Feder 33 liegt auf einem Zwischenteil 31 auf. Das Zwischenteil 31 besteht aus einem parallel geschnittenen Kreissegmentstück, das radial nach außen hin auf der Spannerteilseite einen rechtwinkelig vorstehenden schmalen Steg zum Führen der Feder 33 hat. Das Zwischenteil 31 ist formschlüssig und spielfrei in eine Ausnehmung 23 des Steges 22 eingepaßt und stützt die Feder gegen den Steg 13 hin radial nach innen ab. Die Ausnehmung 23 in dem Steg 22 des Spannerteils 20 ist entlang des Umfangs ausgebildet, wobei die Länge der Ausnehmung 23 weniger als die Hälfte des Umfanges ist, und vorzugsweise weniger als eine Viertel-Bogenlänge beträgt.

Die Wirkungsweise des Riemenspanners ist wie folgt: Ein Verdrehen des Spannerteils 20 führt über eine Mitnahme des am Spannerteil 20 befestigten Federendes zu einer Veränderung der Position des spannerteilseitigen Endes der Feder 33, wodurch eine Änderung der Federkraft wirksam wird, die eine Änderung des Drehmoments um die Achse der Riemenspannvorrichtung bewirkt. Zugleich wird durch das Spannen der Feder eine Verringerung des Durchmessers der Feder und damit eine radial nach innen gerichtete Kraftkomponente erzeugt. Die Feder stützt sich über das Zwischenstück 31 an dem Basisteil ab. Diese Kraft soll als Normalkraft FN1 der Feder 33 bezeichnet werden. Da die Normalkraft FN1 über das Zwischenstück 31 auf den Steg 13 des Basisteils 10 wirkt, wird eine Kompensierung der über die Riemenscheibe 25 übertragenen resultierenden Riemenkraft bewirkt. Das Ende der Feder ist dabei so an dem Spannerteil 20 befestigt, daß das Ende um 90^{o} gegen die Richtung der resultierenden Riemenkraft versetzt ist und ein Viertel einer Windung der Drehschenkelfeder 33 dazwischenliegt. Durch diese Anordnung übt die Feder mit dem Zwischenstück 31 als Abrollpunkt eine Hebelkraft auf das Spannerteil 20 aus. Damit kann über die Normalkraft FN1 ein Teil der auf das Gleitlager 18 wirkenden resultierenden Riemenkraft kompensiert werden. Das Zwischenstück 31 besitzt eine höhere Dicke als der ringförmige Steg 22 des Spannerteils 20, in dessen Ausnehmung 23 das Zwischenstück 31 eingefügt ist. Dadurch ist eine permanente Vorspannung vorhanden. Das Zwischenstück 31 ist in der gzeigten Ausführungsform etwa doppelt so dick wie der ringförmige Steg des Spannerteils 20. Da das Zwischenstück 31 formschlüssig und spielfrei eingefügt ist, wird es bei einer Bewegung des Spannerteils 20 mitgenommen. Das Zwischenstück 31 schleift dabei auf dem ringförmigen Steg 13 des Basisteils, an dem es sich abstützt. Über die Normalkraft FN1 wirkt zwischen dem Zwischenstück 31 und ringförmigen Steg 13 des Basisteils eine Reibungskraft, die zur Dämpfung der Drehbewegung des Spannerteils führt. Aufgrund der erhöhten Dicke des Zwischenteils 31 bleibt auch bei Verschleiß dessen Funktion über einen langen Zeitraum erhalten.

In gespanntem Zustand wirkt über das andere Ende der Feder eine Kraft FN2 auf die Federbuchse radial nach innen. Diese Kraft, die als Normalkraft FN2 bezeichnet werden soll, ist in der Zeichnung als Pfeil dargestellt. Die Normalkraft FN2 wirkt auf den Steg 22 des Spannerteils 20, so daß ein entlang der Achse im Gleitlager wirkendes Kippmoment über das Spannerteil 20 erzeugt wird. Dieses Kippmoment aufgrund der Normalkraft FN2 der Feder ist dem Kippmoment aufgrund der resultierenden Riemenkraft entgegengerichtet und führt zu einer Kompensation der Kippmomente in dem Gleitlager 18. Damit ist das Gleitlager 18 frei von auf dieses wirkende Drehmomente, und die Flächenpressung im Gleitlager 18 ist entlang der Achsenrichtung konstant. Durch den Ausgleich der Drehmomente am Lager 18 wird die Lebensdauer des Lagers und der gesamten Riemenspannvorrichtung erhöht.

Das Zwischenstück 31 und die Federbuchse 32 können einzelnen, oder beide, aus einem Kunststoffmaterial hergestellt sein. Ohne Einschränkung der Funktionsfähigkeit der Riemenspannvorrichtung können auch andere Materialien für das Zwischenstück 31 und die Federbuchse 32 verwendet werden.

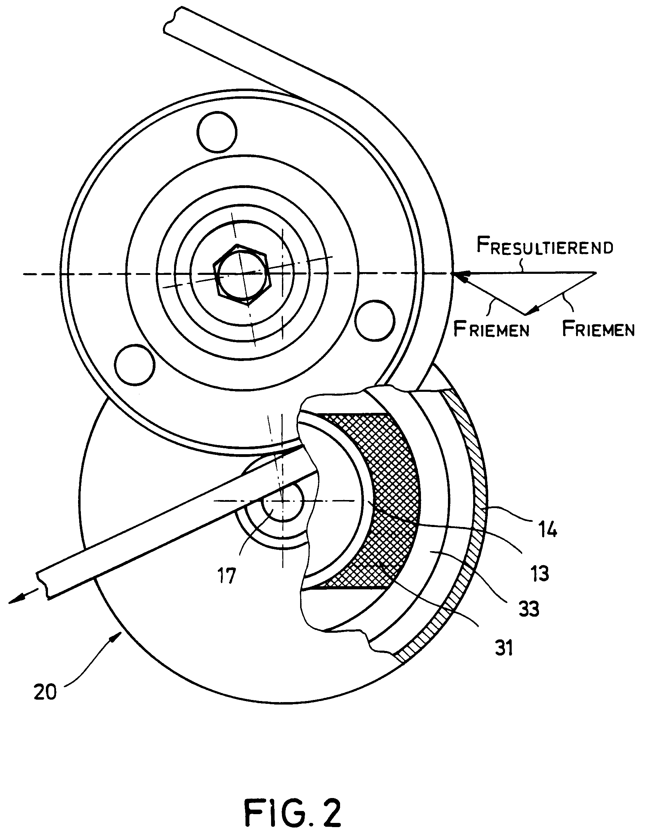

In der Fig. 2 ist die Riemenspannvorrichtung nach einer besonderen Ausführungsform der Erfindung in der Draufsicht dargestellt, wobei ein Teil des Spannerteils 20 aufgebrochen dargestellt ist. Die Wirkung der resultierenden Kraft durch die Riemenspannung ergibt sich aus einem Kräftedreieck, das aus den beiden im Riemen wirkenden Zugkräften gebildet werden kann. Das Zwischenteil 31 ist, wie aus dem aufgebrochenen Teil der Zeichnung ersichtlich ist, in Richtung der resultierenden Kraft in der Riemenspannvorrichtung angeordnet. Die darüber anliegende Feder 33 übt eine Kraft auf das Zwischenstück 31 aus, das seinerseits diese Kraft auf den Steg 13 des Basisteils überträgt. Über eine Hebelwirkung wird das am Spannarm befestigte Federende verspannt. Damit wird ein Ausgleich der resultierenden Riemenkraft erzielt. Zusammen mit dem Kippmoment aufgrund der Kraft FN2 ist damit das Gleitlager frei von Kippmomenten und es wird eine konstante Flächenpressung erzielt.

Neben der in den Zeichnungen dargestellten Ausführungsform sind weitere Ausführungsformen der Erfindung dem Fachmann offensichtlich. Beispielweise kann die Form und Befestigung der Stege am Basisteil 10 und am Spannerteil 20 variieren. Die gegenseitige Lage der Stege kann entsprechend der in Anspruch 3 angegebenen Ausführungsform ausgebildet sein, oder in dazu umgekehrter Weise. Die Feder kann innenliegend angebracht sein, um sich über ein Zwischenstück nach außen hin gegen einen Steg des Basisteils abzustützen. Bei der Feder kann es sich neben einer Drehschenkelfeder auch um eine Spiral- oder um eine Blattfeder handeln. Das Zwischenteil und die Federbuchse können auch aus anderen gleitfähigen Materialien bestehen. Die geometrische Form des Zwischenstücks mit Bezug auf die Größe der Reibfläche kann variieren. Mit den obigen Beispielen ist nur eine Auswahl von möglichen Abwandlungen der Erfindung angegeben.

## Patentansprüche

1. Riemenspannvorrichtung mit einem Basisteil (10) und einem Spannerteil (20) mit einer daran gehaltenen Riemenscheibe (25), wobei Basisteil (10) und Spannerteil (20) in einem Lager (18) um eine gemeinsame Achse gegeneinander verdrehbar gelagert sind, wobei das Basisteil (10) und das Spannerteil (20) jeweils in radialer Richtung beabstandete Stege (13, 22) aufweisen, und Spannerteil (20) und Basisteil (10) über eine Feder (33) miteinander in Verbindung stehen, **dadurch gekennzeichnet**, daß der Steg (22) des Spannerteils (20) eine Ausnehmung (23) besitzt, durch die in radialer Richtung ein Zwischenteil (31) ragt, an dessen einer Seite die Feder (33) anliegt und das sich auf seiner gegenüberliegenden Seite gegen den Steg (13) des Basisteils abstützt, und das Zwischenteil (31) in einer radialen Richtung in Richtung der auf das Spannerteil (20) wirkenden resultierenden Riemenkraft angeordnet ist.

2. Riemenspannvorrichtung nach Anspruch 1, **dadurch gekennzeichnet,** daß die Stege (13, 22) des Basisteils und des Spannerteils als konzentrische ringförmige Stege über den gesamten Umfang ausgebildet sind.

3. Riemenspannvorrichtung nach Anspruch 1, **dadurch gekennzeichnet,** daß in bezug auf die Lage des Steges (22) des Spannerteils (20) der Steg (13) des Basisteils radial innenliegend und die Feder (33) radial außenliegend angeordnet sind.

4. Riemenspannvorrichtung nach Anspruch 1, **dadurch gekennzeichnet**, daß das Zwischenteil (31) aus einem Kunststoffmaterial besteht.

5. Riemenspannvorrichtung nach einem der Ansprüche 1 bis 4, **dadurch gekennzeichnet,** daß das Zwischenteil (31) formschlüssig und spielfrei in die Ausnehmung (23) eingepaßt ist.

6. Riemenspannvorrichtung nach Anspruch 1, **dadurch gekennzeichnet,** daß die Feder (33) eine Drehschenkelfeder ist.

7. Riemenspannvorrichtung nach Anspruch 1 und 5, **dadurch gekennzeichnet,** daß ein Ende der Feder (33) so am Spannerteil befestigt ist, daß sich ein Viertel einer Windung der Feder zwischen dem Befestigungspunkt und der Richtung des Zwischenteils (31) befindet.

8. Riemenspannvorrichtung nach Anspruch 1 und 5, **dadurch gekennzeichnet**, daß die Feder (33) auf der Seite des Basisteils an einer ringförmigen Federbuchse (32) anliegt, wobei die Federbuchse (32) sich radial gegen den Steg (22) des Spannerteils abstützt und eine kürzere axiale Länge als die Feder besitzt.

9. Riemenspannvorrichtung nach Anspruch 7, **dadurch gekennzeichnet,** daß ein zweites Ende der Feder so am Basisteil befestigt ist, daß sich ein Viertel einer Windung der Feder zwischen dem Befestigungspunkt und der Richtung des Zwischenteils (31) befindet.

10. Riemenspannvorrichtung nach Anspruch 1, **dadurch gekennzeichnet,** daß das Zwischenteil (31) eine kürzere axiale Länge als die Feder besitzt.

11. Riemenspannvorrichtung nach Anspruch 1 und 9, **dadurch** **gekennzeichnet**, daß das Zwischenteil (31) sich in einer Lage in der Nähe des Spannerteils (20) befindet.

12. Riemenspannvorrichtung nach Anspruch 1, **dadurch gekennzeichnet,** daß das Zwischenteil (31) etwa doppelt so dick wie der Steg (22) des Spannerteils (20) ist.

13. Riemenspannvorrichtung nach Anspruch 1, **dadurch gekennzeichnet,** daß ein Schmiermittel zwischen dem Steg (13) des Basisteils (10) und dem Zwischenteil (31) und zwischen dem Steg (22) des Spannerteils und der Federbuchse (32) eingefügt ist.
